# EUROPEAN PATENT APPLICATION

(11) **EP 2 679 195 A1**
(43) Date of publication of application: **01.01.2014**
(21) Application number: 11859325.0
(22) Date of filing: 21.02.2011
(51) Int. Cl.: A61C 8/00

(54) **LOCKING TAPER ABUTMENT PROVIDED WITH WEAKENED ZONE**

(71) Applicant: Ho, Chih-chung, Taiwan 843 (TW)
(72) Inventor: Ho, Chih-chung, Taiwan 843 (TW)
(74) Representative: 2K Patentanwälte Blasberg Kewitz & Reichel
(86) International application number: PCT/CN2011/071130
(87) International publication number: WO 2012/113134

(57) **Abstract**

A locking taper abutment with a weakened zone is disclosed, which includes a first portion, a second portion and a third portion. The first portion is used to be disposed inside an opening of a dental implant. The second portion connects to the first portion and has a structurally weakened zone to enable the possible fracture of the locking taper abutment to occur here. The third portion connects to the second portion and is used for joining with a dental prosthesis. Utilizing the structurally weakened zone of the locking taper abutment, possible fracture of the locking taper abutment occurs at the structurally weakened zone. After the locking taper abutment is fractured at the structurally weakened zone, the remained second portion protrudes from the opening of the dental implant. Therefore, the remained second portion can be directly taken out by an instrument so as to reduce the difficulty of clinical operation obviously. Furthermore, the opening wall of the dental implant will not be hurt, and the bacterial closure of the dental implant will not be destroyed.

## Description

### BACKGROUND OF THE INVENTION

### 1. Field of the Invention

The present invention relates to a locking taper abutment, and more particularly to a locking taper abutment with a weakened zone.

### 2. Description of the Related Art

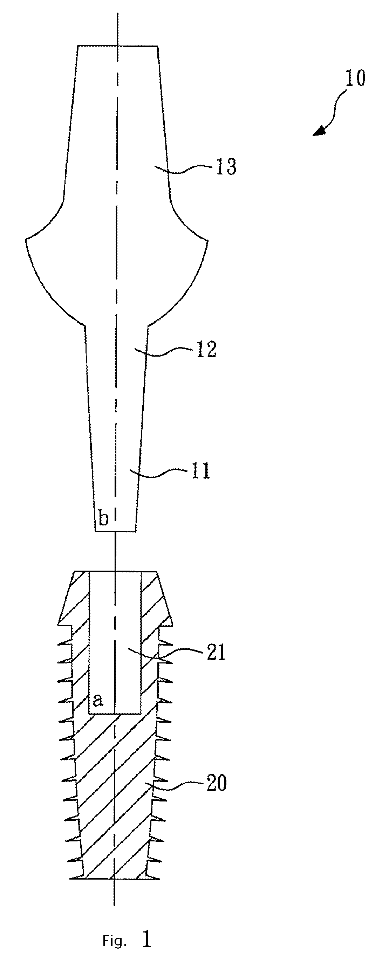

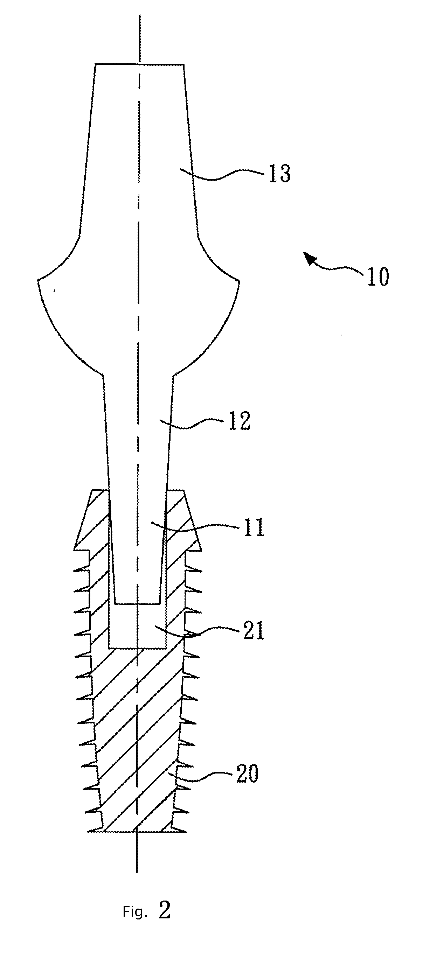

Referring to FIG. 1, it shows a schematic view of a conventional locking taper abutment and implant. Referring to FIG. 2, it shows a combined schematic view of the conventional locking taper abutment and implant. The locking taper connection is a connecting type for combining the abutment and the implant. The conventional locking taper abutment 10 includes a first portion 11, a second portion 12 and a third portion 13. The conventional implant 20 includes an opening 21.

The first portion 11 of the conventional locking taper abutment 10 is a tapered structure, and the angle (b) of the first portion 11 is a little bit bigger than the angle (a) of the opening 21. An appropriately small difference between the angles (a) and (b) can effectively connect the conventional locking taper abutment 10 and the implant 20. The advantages of the locking taper connection are that it is a simple structure, clinically easy to manipulate, good bacterial closure and no foul odor occurred after clinical use.

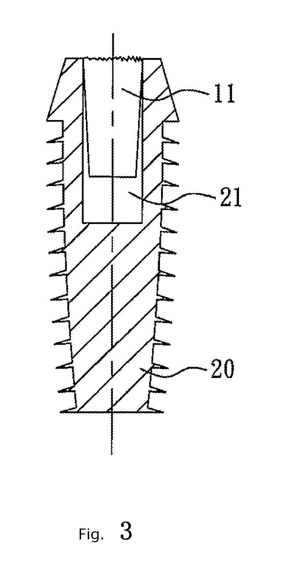

Referring to FIG. 3, it shows a schematic view of the fractured conventional locking taper abutment. Because generally a narrower implant accommodates a narrower abutment, fracture of the abutment may take place clinically. A fracture often occurs near the top of the opening 21 of the implant 20, therefore the fractured first portion 11 remained in the opening 21 of the implant 20 can not be taken out directly by an instrument. It needs to drill the remained first portion 11 through and then take it out. Such an operation is not only clinically difficult, but it may also destroy the bacterial closure if inner wall of the implant 20 is hurt.

### SUMMARY OF THE INVENTION

The object of the invention is to provide a locking taper abutment with a weakened zone so that the remained portion of the fractured abutment can be taken out by an instrument directly, and the opening wall of the dental implant will not be hurt. To achieve the object of the invention, the invention utilizes the following technology.

The present invention provides a locking taper abutment with a weakened zone, including: a first portion, a second portion and a third portion. The first portion is used for disposing inside an opening of a dental implant. The second portion is connected to the first portion and has a structurally weakened zone to enable the possible fracture of the locking taper abutment to occur here. The third portion is connected to the second portion, and is used for joining with a dental prosthesis.

Compared with the conventional technology, the invention has the following advantage. Since the second portion is not connected into the opening of the dental implant and the structurally weakened zone is so designed, possible fracture of the locking taper abutment occurs at the structurally weakened zone. Therefore the remained second portion protrudes from the opening of the dental implant after the locking taper abutment is fractured. The remained second portion can be taken out by an instrument directly. Thus it reduces the difficulty of clinical operation obviously. Furthermore, the opening wall of the dental implant will not be hurt, and the bacterial closure of the dental implant will not be destroyed.

### BRIEF DESCRIPTION OF THE DRAWINGS

FIG. 1 shows a schematic view of a conventional locking taper abutment and an implant;

FIG. 2 shows a combined schematic view of the conventional locking taper abutment and the implant;

FIG. 3 shows a schematic view of the fractured conventional locking taper abutment and the implant;

FIG. 4 shows a schematic view of a locking taper abutment with a weakened zone and a dental implant according to a first embodiment of the present invention;

FIG. 5 shows a schematic view of the fractured locking taper abutment and the dental implant according to the first embodiment of the present invention;

FIG. 6 shows a schematic view of a locking taper abutment with a weakened zone and a dental implant according to a second embodiment of the present invention;

FIG. 7 shows a schematic view of a locking taper abutment with a weakened zone and a dental implant according to a third embodiment of the present invention; and

FIG. 8 shows a schematic view of a locking taper abutment with a weakened zone and a dental implant according to a fourth embodiment of the present invention.

### DETAILED DESCRIPTION OF THE INVENTION

Before the description of the invention, some terminology must be clearly defined. The term "lower" is not related to gravity, it means in deeper bone, and "upper" means it's proximal to gingiva or a prosthesis.

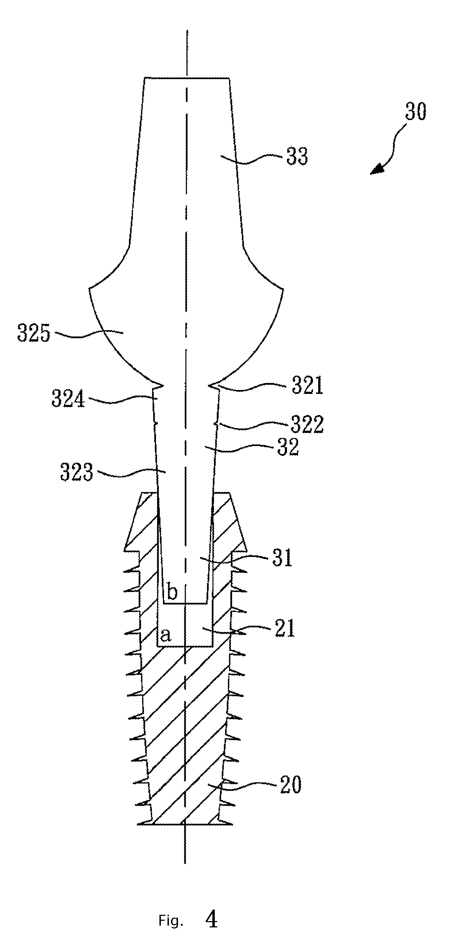

Referring to FIG. 4, it shows a schematic view of a locking taper abutment with a weakened zone and a dental implant according to a first embodiment of the present invention. The locking taper abutment 30 with a weakened zone of the present invention includes a first portion 31, a second portion 32 and a third portion 33. The first portion 31 is used for disposing inside an opening 21 of a dental implant 20. In this embodiment, the first portion 31 is installed entirely into the opening 21 of the dental implant 20. The first portion 31 is a tapered structure, and the angle (b) of the first portion 31 is a little bit bigger than the angle (a) of the opening 21 of the dental implant 20. Since the first portion 31 is connected to the opening 21 of the dental implant 20 with a specific size, the diameter and length of the first portion 31 is specific.

The second portion 32 is connected to the first portion 31 and has a structurally weakened zone 321 so as to enable the possible fracture of the locking taper abutment 30 to occur at the structurally weakened zone 321. In this embodiment, the structurally weakened zone 321 includes at least one recess section extending inwardly from an outer edge of the second portion 32. The structural strength of the structurally weakened zone 321 is smaller than that of the first portion 31, and the structural weakened level must enable the possible fracture of the locking taper abutment 30 to occur at the structurally weakened zone 321, not at the first portion 31.

In this embodiment, the second portion 32 further includes a bottom area 323, a middle area 324 and a top area 325. The bottom area 323 is connected to the first portion 31. The middle area 324 is connected to the bottom area 323, and the structurally weakened zone 321 is mounted on the middle area 324. The top area 325 is connected to the middle area 324, and the outer diameter of the top area 325 is gradually enlarged so as to connect to the third portion 33.

The third portion 33 is connected to the top area 325 of the second portion 32, and is used for joining with a dental prosthesis (not shown in the figures).

In this embodiment, the locking taper abutment 30 of the invention further includes at least one clamp groove 322 mounted on the second portion 32 and disposed between the structurally weakened zone 321 and the first portion 31 to facilitate an instrument to clamp on the clamp groove 322. The structural strength of the clamp groove 322 has to be larger than that of the structurally weakened zone 321.

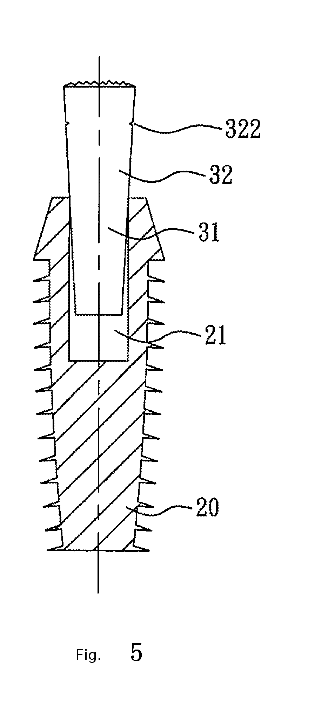

Referring to FIG. 5, it shows a schematic view of the fractured locking taper abutment and the dental implant according to the first embodiment of the present invention. After the locking taper abutment 30 is fractured at the structurally weakened zone 321, the remained second portion 32 protrudes from the opening 21 of the dental implant 20. Therefore, the remained second portion 32 can be taken out directly by an instrument (not shown in the figures) so as to reduce the difficulty of clinical operation obviously. Furthermore, the opening wall of the dental implant 20 will not be hurt, and the bacterial closure of the dental implant 20 will not be destroyed. Additionally, the clamp groove 322 can facilitate the instrument to clamp on so as to take out the remained second portion 32 and first portion 31.

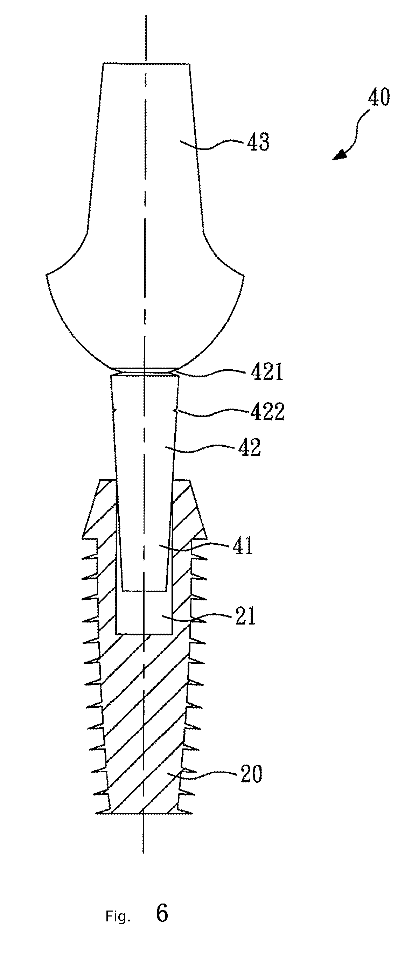

Referring to FIG. 6, it shows a schematic view of a locking taper abutment with a weakened zone and a dental implant according to a second embodiment of the present invention. The locking taper abutment 40 with weakened zone of the present invention includes a first portion 41, a second portion 42 and a third portion 43. In this embodiment, the structurally weakened zone 421 includes a recess ring extending inwardly from an outer edge of the second portion 42. The recess ring is cut equally from the entire outer edge (i.e. 360 degrees) of the second portion 42. Furthermore, according to the second embodiment the locking taper abutment 40 of the invention also includes at least one clamp groove 422.

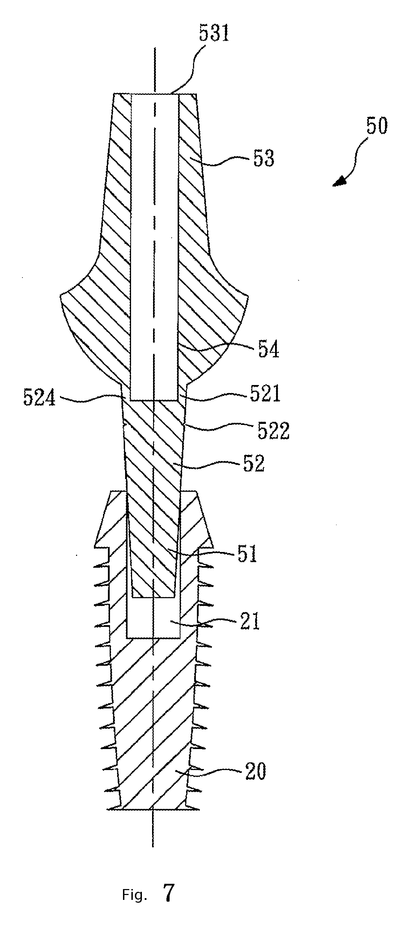

Referring to FIG. 7, it shows a schematic view of a locking taper abutment with a weakened zone and a dental implant according to a third embodiment of the present invention. The locking taper abutment 50 with a weakened zone of the present invention includes a first portion 51, a second portion 52 and a third portion 53. In this embodiment, the structurally weakened zone 521 includes a hole 54 having an opening 531 mounted on the third portion 53, the hole 54 extends from the third portion 53 to the middle area 524 of the second portion 52. Furthermore, according to the third embodiment the locking taper abutment 50 of the invention also includes at least one clamp groove 522.

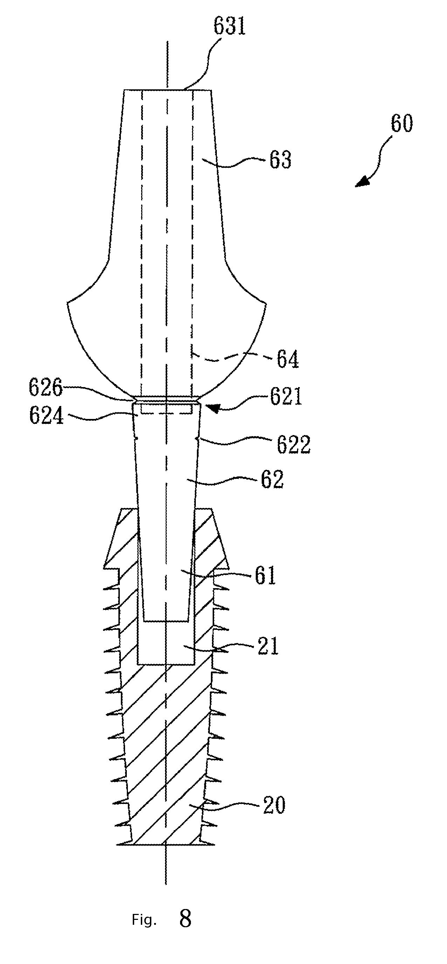

Referring to FIG. 8, it shows a schematic view of a locking taper abutment with a weakened zone and a dental implant according to a fourth embodiment of the present invention. The locking taper abutment 60 with a weakened zone of the present invention includes a first portion 61, a second portion 62 and a third portion 63. In this embodiment, the structurally weakened zone 621 includes a recess ring 626 and a hole 64. The recess ring 626 extends inwardly from an outer edge of the second portion 62. The recess ring 626 is cut equally from the entire outer edge (i.e. 360 degrees) of the second portion 62. The hole 64 has an opening 631 mounted on the third portion 63, and extends from the third portion 63 to the middle area 624 of the second portion 62. Furthermore, according to the fourth embodiment the locking taper abutment 60 of the invention also includes at least one clamp groove 622.

By using the structurally weakened zone 421 of the locking taper abutment 40 according to the second embodiment, the structurally weakened zone 521 of the locking taper abutment 50 according to the third embodiment, and the structurally weakened zone 621 of the locking taper abutment 60 according to the fourth embodiment, the possible fracture of the locking taper abutment 40, 50 or 60 occurs at the structurally weakened zone 421, 521 or 621 so as to achieve the same effect of the first embodiment.

While several embodiments of the present invention have been illustrated and described, various modifications and improvements can be made by those skilled in the art. The embodiments of the present invention are therefore described in an illustrative but not in a restrictive sense. It is intended that the present invention should not be limited to the particular forms as illustrated and that all modifications which maintain the spirit and scope of the present invention are within the scope defined in the appended claims.

## Claims

1. A locking taper abutment with a weakened zone, comprising:
a first portion, for disposing inside an opening of a dental implant;
a second portion, connected to the first portion and having a structurally weakened zone to enable the possible fracture of the locking taper abutment to occur here; and
a third portion, connected to the second portion and for joining with a dental prosthesis.

2. The locking taper abutment according to Claim 1, wherein the structurally weakened zone comprises at least one recess section extending inwardly from an outer edge of the second portion.

3. The locking taper abutment according to Claim 1, wherein the structurally weakened zone comprises at least one recess ring extending inwardly from an outer edge of the second portion.

4. The locking taper abutment according to Claim 1, wherein the structurally weakened zone comprises a hole having an opening mounted on the third portion, the hole extends from the third portion to the second portion.

5. The locking taper abutment according to Claim 1, wherein the structurally weakened zone comprises a recess ring and a hole, the recess ring extends inwardly from an outer edge of the second portion, the hole has an opening mounted on the third portion, and the hole extends from the third portion to the second portion.

6. The locking taper abutment according to Claim 1, further comprising at least one clamp groove mounted on the second portion and disposed between the structurally weakened zone and the first portion.
